# EUROPÄISCHE PATENTSCHRIFT

(11) **EP 1 270 519 B1**
(45) Veröffentlichungstag und Bekanntmachung des Hinweises auf die Patenterteilung: **10.05.2006**
(21) Anmeldenummer: 02013393.0
(22) Anmeldetag: 19.06.2002
(51) Int. Cl.: C03B 33/033, C03C 17/22, C03C 17/00

(54) **Verfahren zur Ritzspurmarkierung laserinduzierter Ritze von Glaselementen**
Method for marking a laser score line on glass articles
Méthode pour marquer le trait de coupe obtenu au laser sur des éléments de verre

(30) Priorität: 21.06.2001 DE 10129876
(43) Veröffentlichungstag der Anmeldung: 02.01.2003
(73) Patentinhaber: Schott AG, 55122 Mainz (DE)
(72) Erfinder: Biethmann, Stefan, 31061 Alfeld (DE); Terstriep, Ludger, 55130 Mainz (DE); Hauer, Dirk, 26954 Nordenham-Ellwürden (DE); Schmidt, Thomas, 31073 Deiligsen (DE); Glenewinkel, Hartmut, 31091 Coppengrave (DE)
(74) Vertreter: Dr. Weitzel & Partner

(56) Entgegenhaltungen:
- GB-A- 2 139 613
- US-A- 3 453 097
- US-A- 5 776 220

## Beschreibung

Die Erfindung betrifft ein Verfahren zur Ritzspurmarkierung laserinduzierter Ritze in Gläsern, im einzelnen mit den Merkmalen aus dem Oberbegriff des Anspruchs 1; ferner ein Verfahren zum Unterteilen von Glaselementen in eine Mehrzahl von Glasteilelementen.

Aus der Druckschrift DE-AS 1244 346 ist ein Verfahren zum laserinduzierten Ritzen von Glas bekannt, bei welchem entlang der Schnittbahn die Erwärmung des Glases mittels eines Laserstrahls erzeugt wird, wobei eine Temperatur unterhalb der Schmelztemperatur des Glases eingestellt wird. Im Anschluß an die Erwärmung wird das Glas gekühlt und durch Klopfen oder Biegen abgetrennt. Bei einem derartigen Verfahren, außer bei Erwärmung über Schmelztemperatur, welche zum Ausschmelzen eines feinen Spaltes führt, ist die Ritzspur nicht erkennbar. Zur möglichen optischen Erkennung der Ritzspur bei gewünschter Vereinzelung der Glaselemente, insbesondere Flachglasscheiben, erfolgt bisher eine optische Kenntlichmachung durch Anhauchen der Ritzspur bei Aufbringung einer geringen Biegespannung. Der Ritz wird des weiteren manuell zwischen den Fingern gemittelt, um dann die Scheibe bzw. das Glaselement zu brechen. Der Nachteil dieses Verfahrens besteht vor allem darin, daß die Sichtbarkeit zeitlich sehr stark begrenzt ist und bei nicht sofort erfolgender optimaler Positionierung der Glasscheibe und Brechen ein erneutes Anhauchen erforderlich wird, um die Erkennbarkeit des Ritzes zu gewährleisten und damit einen sauberen Brechvorgang zu bewerkstelligen. Die Ritzmarkierung, d. h. das Verfahren zur Erkennung der Ritzspur, bildet dabei die Voraussetzung, daß der Ritz bzw. die Ritzspur mittig zwischen den Fingern liegt und somit eine gleichmäßige Kraftverteilung beim Bruch gewährleistet werden kann, da andernfalls das Glaselement, insbesondere die Flachglasscheibe, unter einer Schräge und den dabei entstehenden Brechschlieren an der Bruchkante getrennt wird.

Ein anderes Verfahren, bei welchem vor der Einarbeitung des Ritzes eine Markierung aufgetragen wird, ist aus JP 053 05 467 A vorbekannt. Bei diesem erfolgt die Markierung der einzuarbeitenden Ritzspur mittels eines Absorptionsmittels auf die Glasoberfläche, welche anschließend mittels Laser, insbesondere per YAG-Laser, getrennt wird. Dieses Absorptionsmittel ist erforderlich, um Glaselemente mittels der genannten Lasertechnik überhaupt schneiden zu können. Das Adsorptionsmittel dient dabei neben der Kenntlichmachung des Trennverfahrens auch zur Erwärmung des Glases.

Der Erfindung liegt daher die Aufgabe zugrunde, ein Verfahren zur Ritzspurmarkierung laserinduzierter Ritze in Gläsern bzw. in Glaselementen und ein Verfahren zur Unterteilung von Glaselementen in mehrere Glasteilelemente dahingehend zu verbessern, daß die Erkennbarkeit der Ritzspur unabhängig von äußeren Einflüssen und auch bei Verlängerung der Zeitdauer zur genauen Justierung der Glaselemente beim Brechen gewährleistet ist. Die Markierung soll mit geringem konstruktivem und steuerungstechnischen Aufwand realisiert werden können.

Die erfindungsgemäße Lösung ist durch die Merkmale der Ansprüche 1 und 12 charakterisiert. Vorteilhafte Ausgestaltungen sind in den Unteransprüchen wiedergegeben.

Beim Verfahren zur Ritzspurmarkierung laserinduzierter Ritze in Glaselementen bzw. Gläsern wird der Ritz bzw. die Ritzspur nach der Einarbeitung vor dem Brechvorgang, um eine genaue Positionierung des Glaselementes und gleichmäßige Kraftverteilung zu erzielen, optisch sichtbar gemacht. Erfindungsgemäß erfolgt die Gewährleistung der optischen Erkennbarkeit durch den wenigstens teilweisen Auftrag einer Beschichtung auf die Ritzspur. Die optische Erkennbarkeit wird dabei durch eine zu den Oberflächen der Glaselemente unterschiedlich gewählten Farbgebung der Beschichtung und/oder einer durch die Schichtdicke bedingte Oberflächenerhebung auf der Ritzspur gewährleistet. Eine weitere Möglichkeit besteht in der Erkennbarkeit der Markierung durch zusätzliche UV-Bestrahlung.
Mit der erfindungsgemäßen Lösung ist es möglich, die beim laserinduzierten Ritzen von Gläsern bzw. Glaselementen einaearbeiteten Ritzpuren auf einfache Art und Weise über einen längeren Zeitraum sichtbar zu machen, wobei eine Entfernung auf Wunsch, d. h. optional, erfolgt, beispielsweise nach dem Brechvorgang durch das Waschen der einzelnen Glasteilelemente. Diese Erkennbarkeit über einen längeren Zeitraum ermöglicht beim Trennverfahren von Glaselementen, insbesondere Flachglasscheiben, eine sehr genaue und schnellere Ausrichtung der Ritzspur während des Trennens, insbesondere Brechens. Damit kann eine höhere Produktivität beim Glasschneiden erzielt werden, da nunmehr der Brechvorgang zum geschwindigkeitsbestimmenden Faktor des Gesamtprozesses wird. Der Aufwand für eine erforderliche Nachbearbeitung bzw. der Anteil von Ausschußteilen kann erheblich verringert werden.

Bezüglich des Auftrages der Beschichtung auf die Ritzspur bestehen mehrere Möglichkeiten:
a) durchgängig über die gesamte Ritzspur oder
b) Auftragen von Einzelschichten in bestimmten Abständen über die Länge der Ritzspur, so daß zwischen den einzelnen Ritzspurbereichen mit Beschichtung Ritzspurbereiche frei von einer Beschichtung vorliegen.

Die letztgenannte Möglichkeit ist insbesondere für Ritzspuren mit größerer Länge von Bedeutung, da hier lediglich nur Markierungspunkte oder Markierungsbereiche gesetzt werden, welche als Anhaltspunkt für den weiteren Trennvorgang herangezogen werden und - entsprechend der gewählten Beschichtung - die Entfernung der Markierungen nach erfolgtem Trennvorgang auf einfache Art und Weise realisiert werden kann.

Bezüglich der Wahl der aufgetragenen Beschichtung bestehen eine Mehrzahl von Möglichkeiten. Diese kann transparent oder nicht transparent sein. Dies hängt dabei insbesondere von der farblichen Ausgestaltung des zu trennenden Glaselementes ab. Bei Wahl einer transparenten Beschichtung zum Zwecke der Markierung wird dabei vorzugsweise eine Beschichtung mit unterschiedlicher Farbgebung zu der des Glaselementes gewählt. Bei nicht transparenter Beschichtung ist dies nicht erforderlich.

Unter dem Begriff Beschichtung wird im einzelnen der Auftrag einer bestimmten Menge an Flüssigkeit oder einem Flüssigkeits-Luft-Gemisch mit Aushärter auf eine Oberfläche verstanden, wobei die Beschichtung entsprechend der Schichtdicke als Film oder Sprühnebel oder Schicht vorliegen kann. Vorzugsweise werden entsprechend des gewählten Beschichtungsverfahrens Schichten mit sehr geringer Schichtdicke gewählt, d. h. Beschichtungen in Form eines Filmes oder Sprühnebels. Die Beschichtung kann dabei im einzelnen durch eine Strahleinrichtung, einen Stift oder eine Sprüheinrichtung aufgetragen werden. Im erstgenannten Fall erfolgt dabei der Auftrag einer Flüssigkeit, welche aushärtet. Im zweiten Fall werden von einem festen Material Partikel abgegeben, welche auf die Oberfläche aufgetragen werden oder aber durch Druck auf ein Speichermedium ebenfalls eine bestimmte Menge aushärtender Flüssigkeit, und im dritten Fall erfolgt ein Auftrag durch Zerstäubung der Flüssigkeit und Absetzen auf der Oberfläche, wobei das letztgenannte Verfahren nicht nur an der Ritzspur zum Aufliegen kommt, sondern in der Regel auch im Bereich neben der Ritzspur. Daher können die ersten beiden Verfahren auch als direkte Markierungsverfahren bezeichnet werden, während das Besprühen in der Regel als indirektes Verfahren zu bezeichnen ist.

Bezüglich der konkreten Ausgestaltung der einzelnen Markierungssysteme bestehen ebenfalls eine Mehrzahl von Möglichkeiten. Bei Auftrag der Beschichtung als Strahl ist dazu wenigstens eine Strahleinrichtung, umfassend wenigstens eine Auftragsdüse, vorgesehen. Die Ausführung des Markiersystems zum Zwecke der Markierung mittels eines Stiftes umfaßt diese eine Stifthalte- und Führungseinrichtung, welche den Stift führt bzw. die als Auftragseinrichtung den Stift enthält, welche entweder durch Druck auf ein Speichermedium eine entsprechende Menge an Auftragsflüssigkeit abgibt.
Bei Ausführung als Sprühsystem umfaßt dieses eine Düse, in welcher die Flüssigkeit mit Luft oder einem anderen Gas vermischt wird und als Sprühnebel ausgegeben wird.

In allen drei Fällen kann dabei entweder die Abgabeeinrichtung für das Markiersystem ortsfest sein, d. h. die Vomahme der Ritzspurmarkierung erfolgt bei Relativbewegung des Glaselementes gegenüber der Auftrags- bzw. Abgabeeinrichtung. Im anderen Fall ist die Auftrags- bzw. Abgabeeinrichtung beweglich gegenüber der Oberfläche des Glaselementes und damit der Ritzspur geführt. Die Einbettung der Ritzspurmarkierung in ein erfindungsgemäßes Trennverfahren erfolgt zwischen dem laserinduzierten Ritzen und dem eigentlichen Trennvorgang, dem Brechen. Entsprechend der gewählten Art der Beschichtung ist es erforderlich, die nach erfolgter Trennung vorliegenden Glasteilelemente einem Waschvorgang zu unterziehen.

Die erfindungsgemäße Lösung ist nachfolgend anhand von Figuren erläutert. Darin ist.im einzelnen folgendes dargestellt:
- Fig. 1: verdeutlicht in schematisiert stark vereinfachter Darstellung eine Vorrichtung zum Trennen von Glaselementen die Funktionsweise eines Markierungssystems mit Strahlauftrag;
- Fig. 2: verdeutlicht in schematisch vereinfachter Darstellung anhand einer Ausführung gemäß Fig. 1 eine Ausführung des Markierungssystems mit Stiftmarkierung;
- Fig. 3: verdeutlicht anhand einer Ausführung gemäß Fig. 1 die Ausgestaltung eines Markierungssystems mit Sprühnebelmarkierung.

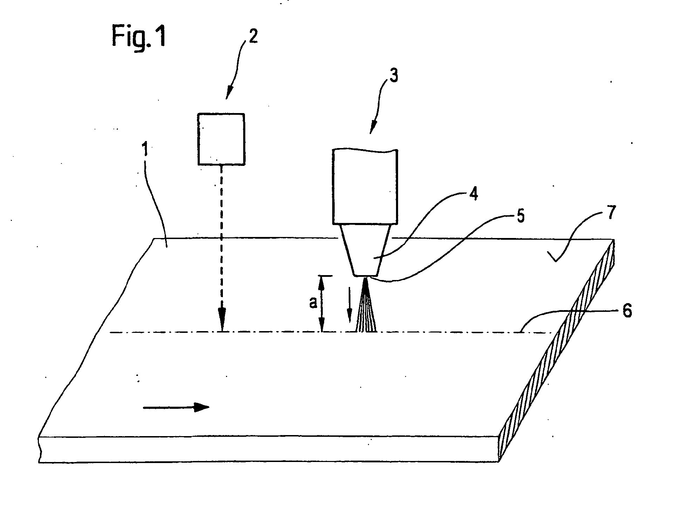

Figur 1 verdeutlicht in schematisch stark vereinfachter Darstellung für ein Glaselement 1 eine diesem zum Trennen zugeordnete, lediglich schematisch angedeutete Vorrichtung 2 zum laserinduzierten Ritzen und ein erfindungsgemäßes Markierungssystem 3. Bei dieser Ausführung ist die Vorrichtung zum laserinduzierten Ritzen 2 und das Markierungssystem 3 ortsfest, d. h. unbeweglich gegenüber dem Glaselement angeordnet, und das Glaselement 1 wird relativ zu den entsprechenden Funktionseinheiten dieser Vorrichtungen bzw. des Markierungssystems 3 bewegt. Auf den konkreten Aufbau der Vorrichtung zum laserinduzierten Ritzen 2 wird an dieser Stelle nicht weiter eingegangen. Diesbezüglich bestehen durch die Wahl des Markierungssystems keinerlei Restriktionen. Das Markierungssystem 3 umfaßt im dargestellten Fall mindestens eine Auftragseinrichtung 4 in Form einer Düse, welche einen Strahl abgibt, beispielsweise in Form eines Freistrahles, d. h. zwischen dem Ausgang 5 der Auftragseinrichtung 4 und der Ritzspur 6, welche an der Oberfläche 7 des Glaselementes eingearbeitet ist, besteht ein bestimmter Abstand a. Die Düse bzw. die Auftragseinrichtung 4 kann jedoch auch in unmittelbarer Nähe der Oberfläche münden, so daß ein Freistrahl nicht mehr gegeben ist und der Auftrag sozusagen direkt erfolgt.

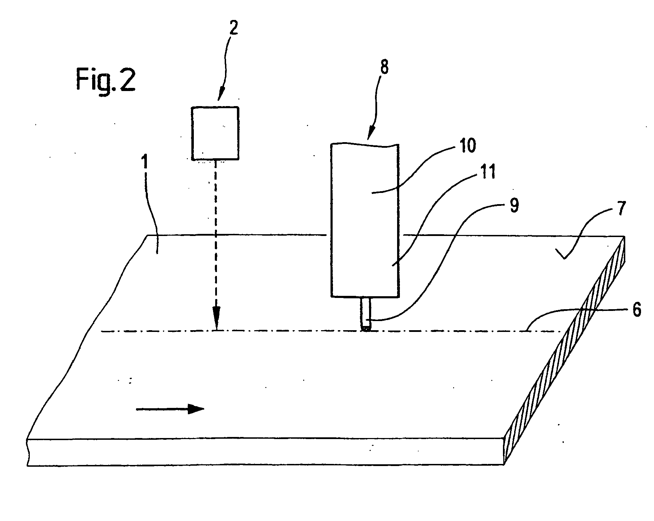

Figur 2 verdeutlicht eine analoge Ausführung zur Figur 1, wobei jedoch als Auftragseinrichtung 8 des Markierungssystems 3 ein Stift 9 vorgesehen ist, welcher aus einem Speicher 10 eine einem Aushärter beinhaltende Flüssigkeit oder fest auf der Oberfläche 7 des Glaselementes haftende Partikel absetzt. Dem Stift 9 ist dabei eine Führungseinrichtung 11 zugeordnet, welche ebenfalls ortsfest gegenüber dem Glaselement 1 gelagert ist, d. h. nicht bewegbar.

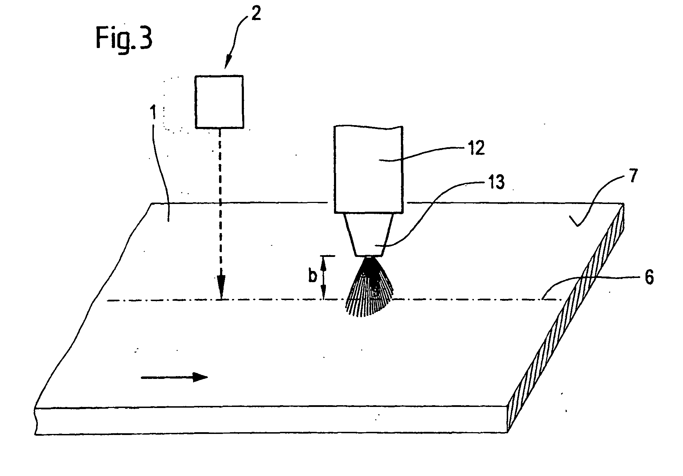

Figur 3 verdeutlicht eine weitere Ausführung eines Markierungssystems 3, umfassend eine Einrichtung 12 zur Erzeugung eines Sprühnebels, umfassend wenigstens eine Sprühdüse 13. Diese ist gegenüber der Oberfläche 7 des Glaselementes ebenfalls in einem bestimmten Abstand b angeordnet, so daß bei Austritt aus der Sprühdüse 13 eine Verteilung über einen Bereich beidseits der Ritzspur 6 erfolgt. Vorzugsweise sind in allen beschriebenen Ausführungen des Markierungssystems und alle Einzelelemente bezüglich der Positionierung an die Einrichtung zum laserinduzierten Ritzen gekoppelt. Die erfindungsgemäße Lösung ist nicht auf die in den Figuren dargestellten Ausführungen beschränkt. Weitere Ausgestaltungen sind möglich. Entscheidend ist, daß die Markierung durch eine, über einen längeren Zeitraum haltende Schicht, beispielsweise in Form eines Films oder eines Sprühnebels, erfolgt, wobei diese Schicht bzw. der Sprühnebel optisch von der Oberfläche der Glasfläche zu unterscheiden ist.

### Bezugszeichenliste

- 1: Glaselement
- 2: Vorrichtung zum laserinduzierten Ritzen von Glaselementen
- 3: Markierungssystem
- 4: Auftragseinrichtung
- 5: Ausgang einer Düse
- 6: Ritzspur
- 7: Oberfläche
- 8: Auftragseinrichtung
- 9: Stift
- 10: Speicher
- 11: Führungseinrichtung
- 12: Einrichtung zur Erzeugung eines Sprühnebels
- 13: Sprühdüse
- a: Abstand zwischen Ausgang der Auftragseinrichtung 4 und Oberfläche 7 des Glaselementes 1
- b: Abstand zwischen Ausgang der Sprühdüse 13 und Oberfläche 7 des Glaselementes 1

## Patentansprüche

1. Verfahren zur Ritzspurmarkierung laserinduzierter Ritze vor einem Trenn-oder Brechrorgang von Gtasetementen (1) durch optische Sichtbarmachung, **dadurch gekennzeichnet, daß** die optische Sichtbarmachung durch Auftragen einer Beschichtung auf die eingearbeitete Ritzspur mit einem Markierungssystem erzeugt wird, das eine Auftragsflussigkeit abgibt.

2. Verfahren nach Anspruch 1, **dadurch gekennzeichnet, daß** die Beschichtung durchgängig über die gesamte Ritzspur vorgenommen wird.

3. Verfahren nach Anspruch 1, **dadurch gekennzeichnet, daß** die Beschichtung nur auf einzelne Bereiche der Ritzspur (2) aufgetragen wird.

4. Verfahren nach einem der Ansprüche 1 bis 3, **dadurch gekennzeichnet, daß** die Beschichtung mit einem Beschichtungsmaterial unterschiedlicher Farbgebung zur Farbgebung der Oberfläche des Glaselementes (1) erfolgt.

5. Verfahren nach einem der Ansprüche 1 bis 4, **dadurch gekennzeichnet, daß** die Beschichtung mit einer Dicke aufgetragen wird, wobei die optische Erkennbarkeit wenigstens über die Schichtdicke erfolgt.

6. Verfahren nach einem der Ansprüche 1 bis 4, **dadurch gekennzeichnet, daß** die Beschichtung als Film mit geringer Schichtdicke ausgeführt ist.

7. Verfahren nach einem der Ansprüche 1 bis 6, **dadurch gekennzeichnet, daß** eine transparente Beschichtung aufgetragen wird.

8. Verfahren nach einem der Ansprüche 1 bis 6, **dadurch gekennzeichnet, daß** eine nichttransparente Beschichtung aufgetragen wird.

9. Verfahren nach einem der Ansprüche 1 bis 8, **dadurch gekennzeichnet, daß** die Beschichtung mittels eines Freistrahles aufgetragen wird.

10. Verfahren nach einem der Ansprüche 1 bis 9, **dadurch gekennzeichnet, daß** die Beschichtung als Sprühnebel, in Form eines Gemisches aus einem Beschichtungsmittel und einem Gas, aufgetragen wird

11. Verfahren nach einem der Ansprüche 1 bis 9, **dadurch gekennzeichnet, daß** der Auftrag über die Länge der Ritzspur durch Relativbewegung des Glaselementes (1) gegenüber dem Markierungssystem erfolgt.

12. Verfahren nach einem der Ansprüche 1 bis 11, **dadurch gekennzeichnet, daß** die Beschichtung unmittelbar nach Einarbeitung des Ritzes (2) aufgetragen wird.

13. Verfahren zum Unterteilen von Glaselementen in eine Mehrzahl von Glasteilelementen, bei welchem laserinduziert mindestens eine Ritzspur im gewünschten Trennbereich eingearbeitet wird, die Ritzspur danach markiert wird und eine Ausrichtung des Glaselementes zur Vomahme des Brechvorganges anhand der Markierung erfolgt, **dadurch gekennzeichnet, daß** die Ritzspurmarkierung nach einem Verfahren gemäß einem der Ansprüche 1 bis 12 erfolgt.

## Claims

1. A method for marking notch tracks of laser-induces notches prior to a severing or breaking process of glass elements (1) by optical visualization, **characterized in that** the optical visualization is produced by applying a coating onto the incorporated notch track (2) with a marking system (3) which emits an application liquid.

2. A method according to claim 1, **characterized in that** the coating is performed continuously over the entire notch track (2).

3. A method according to claim 1, **characterized in that** the coating is applied only to individual regions of the notch track (2).

4. A method according to one of the claims 1 to 3, **characterized in that** the coating is made with a coating material of different coloring for coloring the surface of the glass element.

5. A method according to one of the claims 1 to 4, **characterized in that** the coating is applied with a thickness, with the optical recognizability occurring at least over the layer thickness.

6. A method according to one of the claims 1 to 4, **characterized in that** the coating is provided as a film with a low layer thickness.

7. A method according to one of the claims 1 to 6, **characterized in that** a transparent coating is applied.

8. A method according to one of the claims 1 to 6, **characterized in that** a non-transparent coating is applied.

9. A method according to one of the claims 1 to 8, **characterized in that** the coating is applied by means of an open jet.

10. A method according to one of the claims 1 to 9, **characterized in that** the coating is applied as a spray mist, in the form of a mixture of a coating agent and a gas.

11. A method according to one of the claims 1 to 9, **characterized in that** the application over the length of the notch track (2) occurs by relative movement of the glass element (1) relative to the marking system (3).

12. A method according to one of the claims 1 to 11, **characterized in that** the coating is applied directly after the incorporation of the notch (2).

13. A method for subdividing glass elements into a plurality of partial glass elements, in which at least one notch track (2) is incorporated in a laser-induced manner in the desired severing region, the notch track (2) is thereafter marked and an alignment of the glass element (1) is made for performing the breaking process on the basis of the marking, **characterized in that** the notch track marking occurs according to the method according to one of the claims 1 to 12.

## Revendications

1. Procédé pour le marquage d'entailles formées par laser avant une opération de découpe ou de rupture d'éléments en verre (1) par visualisation optique, **caractérisé en ce que** la visualisation optique est réalisée par application d'un revêtement sur la trace d'entaille (2) réalisée avec un système de marquage (3) libérant un liquide d'application.

2. Procédé selon la revendication 1, **caractérisé en ce que** le revêtement est appliqué de façon continue sur toute la trace d'entaille (2).

3. Procédé selon la revendication 1, **caractérisé en ce que** le revêtement n'est appliqué que dans certaines zones de la trace d'entaille (2).

4. Procédé selon l'une quelconque des revendications 1 à 3, **caractérisé en ce que** le revêtement est réalisé avec un matériau de revêtement qui a une couleur différente de la couleur de surface de l'élément en verre (1).

5. Procédé selon l'une quelconque des revendications 1 à 4, **caractérisé en ce que** le revêtement est appliqué sur une certaine épaisseur, la visibilité optique résultant au moins de l'épaisseur de la couche.

6. Procédé selon l'une quelconque des revendications 1 à 4, **caractérisé en ce que** le revêtement est réalisé sous la forme d'un film de faible épaisseur.

7. Procédé selon l'une quelconque des revendications 1 à 6, **caractérisé en ce qu'**un revêtement transparent est appliqué.

8. Procédé selon l'une quelconque des revendications 1 à 6, **caractérisé en ce qu'**un revêtement non transparent est appliqué.

9. Procédé selon l'une quelconque des revendications 1 à 8, **caractérisé en ce que** le revêtement est réalisé au moyen d'un jet fin.

10. Procédé selon l'une quelconque des revendications 1 à 9, **caractérisé en ce que** le revêtement est appliqué par nébulisation sous la forme d'un mélange d'un produit de revêtement et d'un gaz.

11. Procédé selon l'une quelconque des revendications 1 à 9, **caractérisé en ce que** l'application est réalisée sur la longueur de la trace d'entaille (2) par un déplacement relatif de l'élément en verre (1) par rapport au système de marquage (3).

12. Procédé selon l'une quelconque des revendications 1 à 11, **caractérisé en ce que** le revêtement est appliqué immédiatement après la réalisation de l'entaille (2).

13. Procédé pour partager des éléments en verre en une pluralité d'éléments partiels en verre, dans lequel au moins une trace d'entaille (2) est formée par laser dans la zone de découpe souhaitée, la trace d'entaille (2) est ensuite marquée et l'élément en verre (1) est orienté en vue de l'opération de rupture à l'aide du marquage, **caractérisé en ce que** le marquage de la trace d'entaille est réalisé par un procédé selon l'une quelconque des revendications 1 à 12.
